# EUROPÄISCHE PATENTSCHRIFT

(11) **EP 2 149 444 B1**
(45) Veröffentlichungstag und Bekanntmachung des Hinweises auf die Patenterteilung: **23.05.2012**
(21) Anmeldenummer: 08013796.1
(22) Anmeldetag: 31.07.2008
(51) Int. Cl.: B29C 45/26, C05F 17/02

(54) **Verfahren zum Herstellen von Teilen eines Komposters, Spritzgieß-Werkzeug, und Spritzgieß-Anlage**
Method for producing the components of a composter, injection moulding tool and injection moulding facility
Procédé de fabrication de pièces d'un composteur, outil de moulage par injection et installation de moulage par injection

(43) Veröffentlichungstag der Anmeldung: 03.02.2010
(73) Patentinhaber: Graf Plastics GmbH, 79331 Teningen (DE)
(72) Erfinder: Graf, Otto, P., Dipl.-Kfm., 79331 Teningen (DE)
(74) Vertreter: Grünecker, Kinkeldey, Stockmair & Schwanhäusser

(56) Entgegenhaltungen:
- DE-A1- 19 963 248
- DE-U1- 9 110 413
- DE-U1- 9 211 513
- US-A- 5 490 604

## Beschreibung

Die Erfindung betrifft ein Verfahren gemäß Oberbegriff des Patentanspruchs 1 und ein Spritzgießwerkzeug gemäß Oberbegriff des Patentanspruchs 7.

Vorwiegend zur Hauskompostierung verwendete Komposter, die beispielsweise in Baumärkten in flachen Gebinden verkauft und am Aufstellungsort vorwiegend mit Steckverbindungen zusammengebaut werden, haben eine quaderartige Form mit vier Seitenteilen und einem einteiligen oder zweiteiligen, oben liegenden Deckel, wobei in zumindest einem Seitenteil eine Entnahmeklappe vorgesehen sein kann. Der Komposter steht mit der offenen Unterseite auf dem Boden oder einer speziellen Basis. Zum Herstellen der Teile des Komposters ist ein Verfahren bekannt, bei dem in einer bis drei Spritzgießmaschinen in drei verschiedenen Werkzeugen jeweils ein Seitenteil ohne Entnahmeklappe, ein Seitenteil (Frontteil) mit Entnahmeklappe, und eine Deckelhälfte oder ein Deckel geformt wird. Für sämtliche Teile eines Komposters sind somit fünf bis sechs Spritzgießzyklen jeweils von etwa 50 bis 60 Sekunden Dauer erforderlich. Dabei ist die Zykluszeit speziell für eine Deckelhälfte erheblich kürzer als die Zykluszeit für jeden Seitenteil. Die geformten Seitenteile ohne Entnahmeklappe, mit Entnahmeklappe, und die Deckelhälften werden dann beispielsweise auf Paletten gestapelt und zwischengelagert, wobei die Anzahl der zwischenzulagemden Deckelhälften die Größte wird. Aus dem Zwischenlager werden die für einen Komposter benötigten Teile entnommen und in einer separaten Packstation zu dem flachen Gebinde verpackt. Dieses Verfahren bringt einerseits eine relativ geringe Maschinenausbringungsmenge mit sich, erfordert andererseits ein Zwischenlager zumindest für die Deckel- oder Deckelhälften, und muss logistisch straff organisiert werden. Ferner ist es üblich, zur logistischen Vereinfachung und aus Symmetriegründen alle Seitenteile mit Entnahmeklappen zu formen. Für jede Entnahmeklappe muss hierbei mehr Material verarbeitet werden und fällt durch die Entnahmeklappen die Stabilität des zusammengebauten Komposters unter Umständen nicht zufriedenstellend aus.

Bei der Herstellung der Teile des aus DE 91 10 413 U bekannten Komposters in einer Spritzgießanlage werden in Spritzgießzyklen untereinander identische Vorder- und Rückwände und Seitenwände sowie zwei voneinander verschiedene Deckelhälften hergestellt. Aus der Gesamtheit dieser Teile lässt sich ein vollständiger Komposter besonders einfach montieren.

Bei der Herstellung der Teile des aus DE 92 11 513 U bekannten Komposters wird in Spritzgießzyklen ein Bauteilsatz für einen vollständigen Komposter hergestellt, wobei der Bauteilsatz aus vier identischen Seitenwände und einem von den Seitenwänden verschiedenen Deckel besteht. Innerhalb der Bauteilsatzes sind die Teile so gestaltet, dass sie sich sehr zweckmäßig verpacken und aufeinanderstapeln lassen.

Aus DE 199 63 248 A ist ein Verfahren zum Herstellen nur von Hauptkomponenten eines Abfallbehälters in einer Spritzgießanlage bekannt, wobei der Abfallbehälter ein sogenanntes Mülltonnenhäuschen oder Müllbeutelhäuschen ist, und aus den jeweils paarweise identischen Grundkomponenten und zusätzlichen Ausstattungsteilen, wie Beschlägen, Innenausstattungen und Zubehörteilen zusammengebaut wird, wobei die Beschläge, Innenausstattungen und Zubehörteile extra beschafft oder hergestellt und eingebaut werden. Da die Hauptkomponenten jeweils paarweise identisch sind, lässt sich in einem Spritzgießzyklus die Hälfte der erforderlichen Hauptkomponenten in einem Spritzgießwerkzeug herstellen, und liegen nach zwei Spritzgießzyklen sämtliche Hauptkomponenten vor, aus denen mit den Beschlägen, den Innenausstattungen und dem Zubehör ein vollständiger Abfallbehälter gebaut wird.

Der Erfindung liegt die Aufgabe zugrunde, ein Verfahren, ein Spritzgießwerkzeug, und eine Spritzgießanlage, der oben erwähnten Arten anzugeben, mit denen der Zeitaufwand zur Formung der Teile für jeweils einen vollständigen Komposter verkürzt wird, Arbeitsschritte bis zum Bereitstellen der Gebinde eingespart und die Logistik und die Lagerhaltung vereinfacht werden.

Die gestellte Aufgabe wird mit den Merkmalen des Patentanspruchs 1, und des Patentanspruchs 7 gelöst.

Durch den Kunstgriff, die Teile entsprechend zumindest einem halben Komposter in einem einzigen Fertigungsschritt bzw. Spritzgießzyklus herzustellen, und nicht mehr Teile laufend vorzuproduzieren, liegen nach jedem zweiten Spritzgießzyklus alle Teile eines kompletten, d.h. vollständigen, Komposters vor, die sich zweckmäßig unmittelbar in ein Gebinde verpacken lassen, aus dem sich der vollständige Komposter zusammenbauen lässt, so dass die gesamte Vorproduktion und Zwischenlagerung sowie das bisher damit zusammenhängende Handling (Verpackung, Überführen der Deckelhälften in das Zwischenlager, Rückführen der Deckelhälften, Auspacken und Zusammenführen) entfallen. Ferner sind zum Herstellen der Teile für einen vollständigen Komposter weniger Spritzgießzyklen erforderlich, so dass sich alle Teile eines vollständigen Komposters in nur einem Bruchteil der bisher erforderlichen Zeit formen lassen.

Das Spritzgießwerkzeug wie auch die Spritzgießanlage bieten den Vorteil, für die Herstellung der Teile für einen vollständigen Komposter in zwei Spritzgießzyklen Zeit einsparen zu können.

Die Spritzgießanlage mit der direkt angeschlossenen Verpackungsstation bietet beim Durchführen des Verfahrens den Vorteil, dass nach jedem zweiten Spritzgießzyklus bereits ein einem vollständigen Komposter entsprechendes flaches Gebinde direkt an der Spritzgießanlage vorliegt, so dass weitere zeitaufwändige und arbeitsintensive Zwischenschritte entfallen, und die für den Ablauf von der Herstellung bis zum Versand erforderliche Logistik und Lagerhaltung gestrafft sind.

Bei einer zweckmäßigen Verfahrensvariante werden in jedem der zwei Spritzgießzyklen in einem Werkzeug nur die Teile entsprechend einem halben Komposter gleichzeitig geformt, vorzugsweise zwei Seitenteile und eine Deckelhälfte. Die geformten Teile können nach den zwei Spritzgießzyklen sofort in das Gebinde verpackt werden und ermöglichen den Zusammenbau des vollständigen Komposters. Günstig werden in jedem der zwei Spritzgießzyklen eine Deckelhälfte, ein Seitenteil mit Entnahmeklappe und ein Seitenteil ohne Entnahmeklappe gleichzeitig geformt.

Alternativ werden in dem einen Spritzgießzyklus in einem Werkzeug eine Deckelhälfte oder ein Deckel und zwei Seitenteile mit Entnahmeklappe und im zweiten Spritzgießzyklus in einem anderen Werkzeug eine Deckelhälfte oder ein Deckel und zwei Seitenteile ohne Entnahmeklappe, jeweils gleichzeitig, geformt. Auf diese Weise wird zwar bei einteiligem Deckel, gegebenenfalls aus Symmetriegründen, ein für diesen Komposter nicht benötigter Überschussdeckel geformt, der jedoch dann entweder entsorgt oder für andere Zwecke ausgesondert werden kann.

Dieser Umstand kann bei einer weiteren Verfahrensvariante dadurch vermieden werden, dass in einem Spritzgießzyklus in dem Spritzgießwerkzeug die Formung eines Deckels blockiert wird. In den zwei Spritzgießzyklen werden somit in einem Werkzeug drei Teile und in dem anderen Werkzeug nur zwei Teile geformt, so dass nach den zwei Spritzgießzyklen unmittelbar ein einem vollständigen Komposter entsprechendes Gebinde verpackt werden kann, und keine weiteren Arbeitsschritte erforderlich sind.

Eine weitere, zweckmäßige Verfahrensvariante, deren Produktionsresultat dazu führt, dass die Teile des Komposters ein Gebinde bilden, zeichnet sich dadurch aus, dass die Teile des vollständigen Komposters bereits unmittelbar nach den zwei Spritzgießzyklen verpackt werden. Trotz der relativ kurzen Zeit für zwei Spritzgießzyklen reicht diese Zeit, um die Teile in das Gebinde zu verpacken, so dass das Verfahren zügig und mit geringem Platzbedarf durchführbar ist.

Zweckmäßig werden die zwei Spritzgießzyklen in einer oder in zwei Spritzgießmaschinen, und dann, zumindest weitgehend synchron, durchgeführt. Mit zwei Spritzgießmaschinen lässt sich die Zeit noch weiter verkürzen, die für die Herstellung und das Verpacken der Teile eines vollständigen Komposters gebraucht wird.

Eine zweckmäßige Ausführungsform des Spritzgießwerkzeugs zeichnet sich dadurch aus, dass im Werkzeug der Formhohlraum für den Deckel mit einer Einspritz-Blockiervorrichtung versehen ist. Um bei dem einen der zwei Spritzgießzyklen nicht einen Überschussdeckel zu formen, wird die Einspritz-Blockiervorrichtung betätigt, so dass der Formhohlraum für den Deckel in diesem Werkzeug nicht mit Formmaterial gefüllt wird, sondern nach den zwei Spritzgießzyklen exakt nur die Teile produziert worden sind, die für einen vollständigen Komposter gebraucht werden, der einen einteiligen Deckel besitzt.

Bei einer zweckmäßigen Ausführungsvariante der Spritzgießanlage ist der Spritzgießanlage eine Absonderungsstation für je einen in den zwei Spritzgießzyklen überschüssig geformten Deckel vorgesehen. Auf diese Weise können die nach den zwei Spritzgießzyklen geformten Teile korrekt sofort zu dem Gebinde für einen vollständigen Komposter verpackt werden.

Anhand der Zeichnungen werden Ausführungsformen der Erfindung erläutert. Es zeigen:
- Fig. 1: eine Schemaansicht einer Spritzgießanlage, symbolisiert zur Verdeutlichung des Ab- laufs eines Verfahrens zum Herstellen der Teile eines Komposters durch Spritzgie- ßen,
- Fig. 2: eine Schemadraufsicht auf ein Werkzeug (eine Werkzeughälfte) in einer ersten Aus- führungsform,
- Fig. 3: eine Schemadraufsicht auf ein Werkzeug in einer zweiten Ausführungsform,
- Fig. 4: eine Schemadraufsicht auf ein Werkzeug einer dritten Ausführungsform, und
- Fig. 5: eine Schemadraufsicht auf ein Werkzeug einer weiteren Ausführungsform.

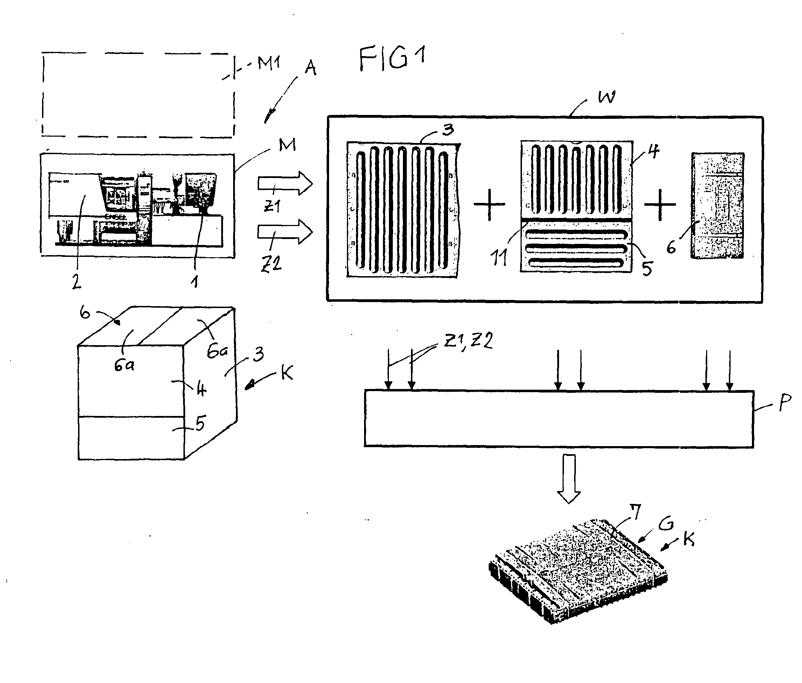

Fig. 1 verdeutlicht schematisch eine Spritzgießanlage A zum Spritzgießen von Teilen für Komposter K aus Kunststoff. Der jeweilige Komposter K hat quaderartige Form mit vier Seitenteilen 3, 4, von denen zumindest ein Seitenteil 4 eine Entnahmeklappe 5 aufweisen kann, und einem oben liegenden einteiligen Deckel 6a oder zwei Deckelhälften 6. Der Komposter K steht mit offener Unterseite direkt auf dem Boden oder einer speziellen Basis (nicht gezeigt). Der Komposter K ist aus den Teilen hauptsächlich durch Steckverbindungen zusammenbaubar, und wird als flaches Gebinde G geliefert, in dem die einzelnen Teile mit beispielsweise Spannbändern 7 verpackt sind. Die Entnahmeklappe 5 und/oder der Deckel 6a und/oder zumindest eine Deckelhälfte 6 ist bzw. sind aufklappbar.

In der Spritzgießanlage A in Fig. 1 werden die einem vollständigen Komposter entsprechenden Teile in einer Spritzgießmaschine M mit einer Spritzgieß-Sektion 2 und einer Werkzeug-Sektion 1 in einem Werkzeug W in zwei Spritzgieß-Zyklen Z1, Z2 derart geformt, dass nach den zwei Spritzgieß-Zyklen Z1, Z2 zwei Deckelhälften 6, zwei Seitenteile 4 mit Entnahmeklappen 5 und zwei Seitenteile 3 ohne Entnahmeklappen in einer unmittelbar an der Spritzgießmaschine M positionierten Packstation P in ein flaches Gebinde G verpackt werden können, wobei die Verpackungszeit höchstens solange dauern sollte, wie die zwei Spritzgieß-Zyklen Z1, Z2. Jeweils drei Teile werden hier gleichzeitig in dem Werkzeug W geformt. Gegebenenfalls (gestrichelt angedeutet) ist eine zweite Spritzgießmaschine M1 zum parallelen Arbeiten vorgesehen, die in einem gleichartigen Werkzeug W den jeweils zweiten Spritzgieß-Zyklus Z2 durchführt. In diesem Fall ist es zweckmäßig, wenn die Verpackungszeit in der Packstation P nur etwa solange dauert, wie ein Spritzgieß-Zyklus Z1 oder Z2.

Wie anhand der weiteren Figuren erläutert wird, könnten beispielsweise zwei Spritzgießmaschinen M und M1 zwei verschiedene Werkzeuge W1, W2 oder W3 verwendet werden.

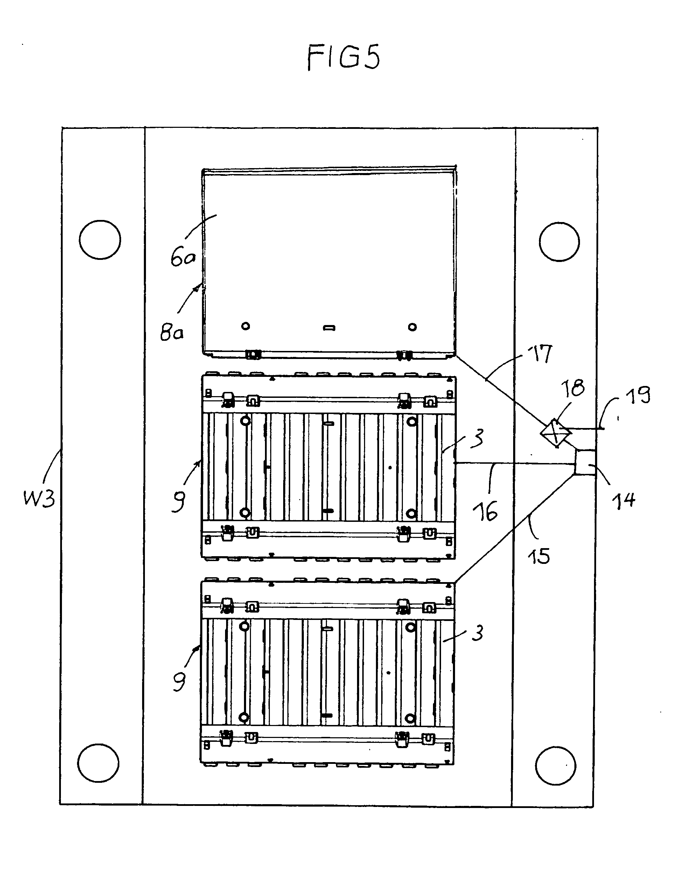

Ferner ist in Fig. 1 eine Absonderungsstation S angedeutet, die direkt vor der Packstation jeweils einen gegebenenfalls geformten Überschussteil, wie anhand von Fig. 5 erläutert, aussondert, der entweder verworfen oder für andere Zwecke verwendet wird.

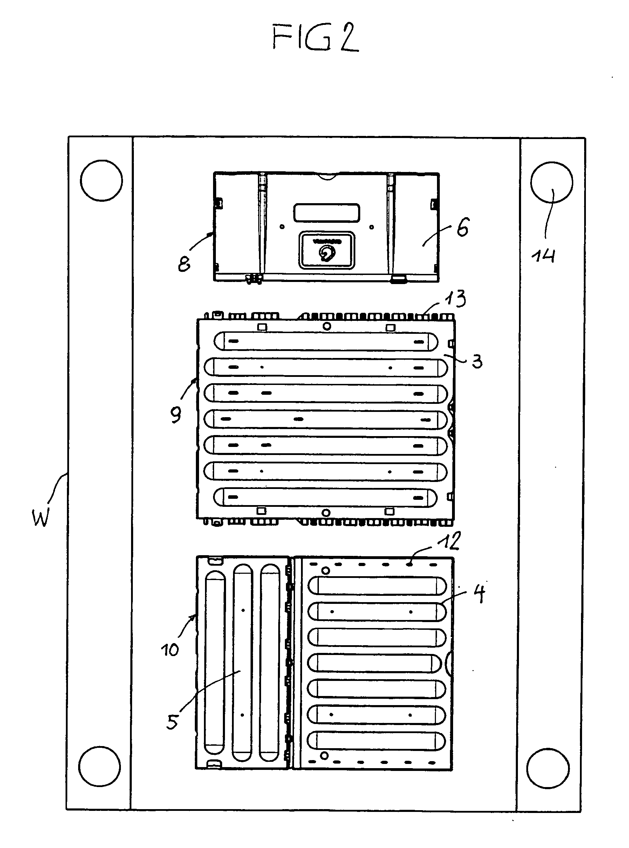

In dem in Fig. 2 vergrößert gezeigten Spritzgieß-Werkzeug W (z. B. entsprechend einer Werkzeughälfte) sind drei Formhohlräume 8, 9, 10, jeweils für eine Deckelhälfte 6, einen Seitenteil 3 ohne Entnahmeklappe und einen Seitenteil 4 mit Entnahmeklappe 5 vorgesehen. Die Werkzeughälften sind beispielsweise über Zentriervorrichtungen 14 aufeinander ausgerichtet und gegeneinander gehalten, wenn ein Spritzgieß-Zyklus Z1, Z2 durchgeführt wird. Die Entnahmeklappe 5 ist beispielsweise über Schamiereinrichtungen 11 klappbar mit dem verbleibenden Teil des Seitenteils 4 verbunden. Die Seitenteile 3, 4 und die Deckelhälften 6 sind beispielsweise über Steckverbindungen 12, 13 miteinander verbindbar, wenn der Komposter K zusammengebaut wird.

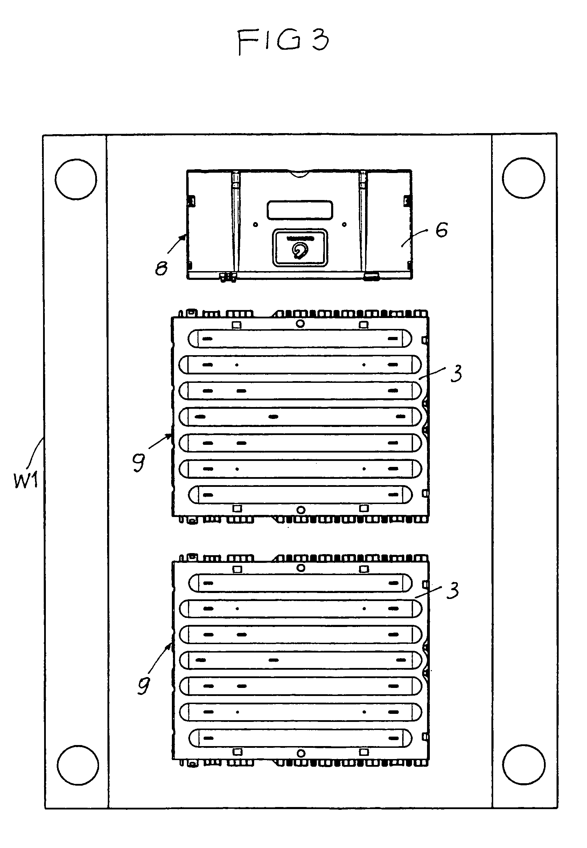

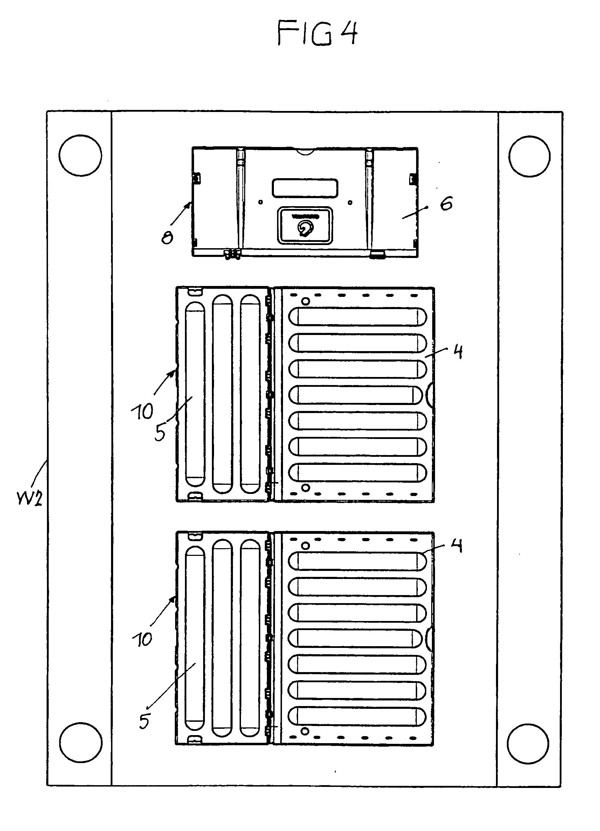

In der Ausführungsform des Spritzgieß-Werkzeugs W1 (Werkzeughälfte) in Fig. 3 sind drei Formhohlräume 8, 9 zum gleichzeitigen Formen einer Deckelhälfte 6 und zweier Seitenteile 3 ohne Entnahmeklappen vorgesehen. Werden mit dem Werkzeug W1 in einer Spritzgießmaschine in zwei Spritzgieß-Zyklen Z1, Z2 die insgesamt sechs Teile geformt, dann lässt sich daraus ein Komposter zusammenbauen, der vier Seitenteile 3 ohne Entnahmeklappen besitzt. Wird mit zwei Spritzgießmaschinen gearbeitet, dann kann in der zweiten Spritzgießmaschine M1 eine Ausführungsform des Werkzeugs W2 von Fig. 4 verwendet werden, das drei Formhohlräume 8, 10 für jeweils eine Deckelhälfte 6 und zwei Seitenteile 4 mit Entnahmeklappen 5 besitzt. Hier wird nach den zwei Spritzgieß-Zyklen Z1, Z2 ein Gebinde G für einen Komposter K verpackt, der aus zwei Seitenteilen 3 ohne Entnahmeklappen, zwei Seitenteilen 4 mit Entnahmeklappen 5 und zwei Deckelhälften 6 zusammengebaut wird.

Alternativ könnte auch mit den Werkzeugen W1 und W der Fig. 2, 3 in zwei SpritzgießMaschinen M, M1 gearbeitet werden, um eine Gebinde G verpacken zu können, aus dem ein Komposter K mit drei Seitenteilen 3 ohne Entnahmeklappen, einem Seitenteil 4 mit Entnahmeklappe 5, und den zwei Deckelhälften 6 zusammenbaubar ist.

Die Ausführungsform des Werkzeugs W3 in Fig. 5 unterscheidet sich von denen der vorhergehenden Ausführungsformen dadurch, dass anstelle einer Deckelhälfte 6 in einem größeren Formhohlraum 8a ein einteiliger größerer Deckel 6a geformt wird, und zwar in Fig. 5 gleichzeitig mit der Formung zweier Seitenteile 3 ohne Entnahmeklappen in Formhohlräumen 9.

Das Werkzeug W3 könnte in Verbindung mit einem anderen Werkzeug in einer zweiten Spritzgießmaschine M1 eingesetzt werden, das zusätzlich zu dem Formhohlraum 8a für den Deckel 6a einen Formhohlraum 10 für einen Seitenteil 4 mit Entnahmeklappe 5 aufweist, und einen Formhohlraum 9 für einen Seitenteil 3 ohne Entnahmeklappe, oder zwei Formhohlräume 10 für zwei Seitenteile 4 mit Entnahmeklappen 5.

Gegebenenfalls wird das andere Werkzeug für den zweiten Spritzgieß-Zyklus ohne Formhohlraum 8a ausgebildet, da für einen solchen Komposter ohnedies nur ein Deckel 6a benötigt wird.

Bei der in Fig. 5 gezeigten Alternative weist das Spritzgießwerkzeug W3 einen Angussbereich 14 auf, von dem z. B. Kanäle 15, 16, 17 zu den Formhohlräumen 8a und 9 verlaufen. Alternativ (nicht gezeigt) könnte jeder Formhohlraum 8a ,9 wenigstens einen eigenen Angussbereich haben. Im Kanal 17 zwischen dem Anguss 14 und dem Formhohlraum 8 ist eine Spritzgieß-Blockiervorrichtung 18 vorgesehen, die eine Betätigung 19 aufweist, so dass bei einem Spritzgieß-Zyklus die Formung eines vollständigen Deckels 6a blockiert wird, und nach den zwei Spritzgieß-Zyklen Z1, Z2 wiederum exakt nur die Teile vorliegen und verpackt werden können, die zum Zusammenbauen eines vollständigen Komposters K benötigt werden.

Wird hingegen in jedem Spritzgieß-Zyklus in dem Spritzgieß-Werkzeug W3 ein vollständiger Deckel 6a geformt, dann kann einer dieser Überschuss-Deckel 6a in der Absonderungsstation S in Fig. 1 abgesondert werden, ehe das Gebinde G verpackt wird.

Dadurch, dass in jeweils in einem einzigen Fertigungsschritt zumindest die Teile eines halben Komposters geformt werden, ergeben sich nach zwei Spritzgieß-Zyklen sämtliche Teile, die für einen vollständigen Komposter benötigt werden. Dadurch lassen sich die bisher erforderliche Vorproduktion und Zwischenlagerung sowie das damit zusammenhängende Handling einsparen, und sind gegenüber der Einzelformung der Teile nur mehr Bruchteile der Herstellungszeit erforderlich. Dies erhöht die Effizienz der Herstellung der Teile und des Ablaufs bis zum Gebinde wesentlich. Das jeweilige Gebinde G kann zwei Deckelhälften oder einen Deckel 6a sowie vier, drei oder zwei gleiche Seitenteile umfassen.

## Patentansprüche

1. Verfahren zum Herstellen der Teile eines aus vier Seitenteilen (3, 4) und einem Deckel (6, 6a) zusammenbaubaren vollständigen Komposters (K) aus Kunststoff durch Spritzgießen der Teile in wenigstens einer ein Werkzeug (W, W1, W2, W3) enthaltenden Spitzgießmaschine (M, M1) einer Spritzgießanlage (A) in Spritzgießzyklen (Z1, Z2), **dadurch gekennzeichnet, dass** in einem jedem Spritzgießzyklus (Z1, Z2) in einem Werkzeug (W, W1, W2, W3) mindestens zwei voneinander verschiedene Teile des Komposters (K) gleichzeitig und in jeweils zwei Spritzgießzyklen (Z1, Z2) alle Teile für einen vollständigen Komposter (K) geformt werden.

2. Verfahren nach Anspruch 1, **dadurch gekennzeichnet, dass** für den vollständigen Komposter (K) in jedem der zwei Spritzgießzyklen (Z1, Z2) in einem Werkzeug exakt nur die Teile des halben vollständigen Komposters (K) gleichzeitig geformt werden, nämlich eine Deckelhälfte (6), ein Seitenteil (4) mit Entnahmeklappe (5), und ein Seitenteil (3) ohne Entnahmeklappe.

3. Verfahren nach Anspruch 1, **dadurch gekennzeichnet, dass** für den vollständigen Komposter (K) im ersten Spritzgießzyklus (Z1) in einem Werkzeug eine Deckelhälfte (6) oder ein Deckel (6a) und zwei Seitenteile (4) mit Entnahmeklappe (5), und im zweiten Spritzgießzyklus (Z2) in einem anderen Werkzeug eine Deckelhälfte (6) oder ein Deckel (6a) und zwei Seitenteile (3) ohne Entnahmeklappe, jeweils gleichzeitig, geformt werden.

4. Verfahren nach Anspruch 3, **dadurch gekennzeichnet, dass** in einem Spritzgießzyklus (Z1) in dem Werkzeug (W3) die Formung eines Deckels (6a) wahlweise blockiert oder geöffnet wird.

5. Verfahren nach wenigstens einem der vorhergehenden Ansprüche, wobei alle Teile für einen vollständigen Komposter als Gebinde (G) verpackt werden, **dadurch gekennzeichnet, dass** die Teile des vollständigen Komposters (K) nach den zwei Spritzgießzyklen (Z1, Z2) unmittelbar an der Spritzgießanlage (A) in das Gebinde (G) verpackt werden.

6. Verfahren nach wenigstens einem der vorhergehenden Ansprüche, **dadurch gekennzeichnet, dass** die zwei Spritzgießzyklen (Z1, Z2) in einer oder in zwei Spritzgießmaschinen (M, M1) durchgeführt werden.

7. Spritzgießwerkzeug (W, W1, W2, W3) zum Formen von Teilen eines aus vier Seitenteilen (3, 4) und einem Deckel (6, 6a) zusammenbaubaren, vollständigen Komposters aus Kunststoff in Spritzgießzyklen (Z1, Z2) in einer Spritzgießmaschine (M, M1), **dadurch gekennzeichnet, dass** das Spritzgießwerkzeug (W1, W2, W3) einen Formhohlraum (8, 8a) für eine Deckelhälfte (6) oder einen Deckel (6a), einen Formhohlraum für einen Seitenteil (3) ohne Entnahmeklappe oder mit Entnahmeklappe (5), und einen weiteren Formhohlraum für einen Seitenteil (3, 4) mit Entnahmeklappe (5) oder ohne Entnahmeklappe zum jeweils gleichzeitigen Formen von Komposterteilen aufweist, und dass in dem Spritzgießwerkzeug in jeweils zwei Spritzgießzyklen (Z₁,Z₂) alle Teile für einen vollständigen Komposter herstellbar sind.

8. Spritzgießwerkzeug nach Anspruch 7, **dadurch gekennzeichnet, dass** im Werkzeug (W3) eine Einspritz-Blockiervorrichtung (18, 19) für den Formhohlraum (8a) für den Deckel (6a) versehen ist.

9. Spritzgießanlage (A) mit mindestens einer Spritzgießmaschine (M, M1) und wenigstens einem Werkzeug (W, W1, W2, W3) zum Formen von Teilen eines aus vier Seitenteilen (3, 4) und zwei Deckelhälften (6) oder einem Deckel (6a) zusammenbaubaren, vollständigen Komposters (K) aus Kunststoff in Spritzgießzyklen (Z1, Z2), wobei die spritzgieβanlage (A) wenigstens ein spritzieβwerkzeug (W,W₁W₂, Ww₃) nach Anspruch 7 aufweist.

10. Spritzgießanlage nach Anspruch 9, **dadurch gekennzeichnet, dass** direkt an der Spritzgießanlage (A) eine Verpackungsstation (P) zum Verpacken der in zwei Spritzgießzyklen (Z1, Z2) geformten Teile des vollständigen Komposters (K) in ein Gebinde (G) vorgesehen ist.

11. Spritzgießanlage nach Anspruch 9, **dadurch gekennzeichnet, dass** in der Spritzgießanlage (A) eine Absonderungsstation (S) für einen bei den zwei Spritzgießzyklen (Z1, Z2) für die Formung sämtlicher Teile für den vollständigen Komposter (K) überschüssig geformten Teil, z.B. einem Deckel (6a), vorgesehen ist.

## Claims

1. Method for producing the components of a composter (K) from plastic material, which composter (K) is to be built completely of four side parts (3, 4) and lid (6, 6a), by injection moulding the parts during injection moulding cycles (Z1, Z2) in an injection moulding machine (M, M1) containing at least one tool (W, W1, W2, W3) of an injection moulding assembly (A), **characterised in that** by each injection moulding cycle (Z1, Z2) in one tool (W, W1, W2, W3) at least two parts of the composter (K) which parts are different from each other are formed simultaneously, and that in respective two injection moulding cycles (Z1, Z2) all parts required for the complete composter (K) are formed.

2. Method according to claim 1, **characterised in that** for the complete composter (K) in each of the two injection moulding cycles (Z1, Z2) in one tool exactly only the parts of the half complete composter (K) are formed simultaneously, namely a lid half (6), a side part (4) including a removal flap (5), and a side part (3) without removal flap.

3. Method according to claim 1, **characterised in that** for the complete composter (K) in the first injection moulding cycle (Z1) in one tool a lid half (6) or a lid (6a) and two side parts (4) respectively including a removal flap (5), and in the second injection moulding cycle (Z2) in another tool a lid half (6) or a lid (6a) and two side parts (3) without a removal flap, are formed respectively simultaneously.

4. Method according to claim 3, **characterised in that** during an injection moulding cycle (Z1) in the tool (W3) the production of a lid (6a) selectively is blocked or is released.

5. Method according to at least one of the preceding claims, wherein all parts for a complete composter are packed as a container (G), **characterised in that** the parts for a complete composter (K) are packed as the container (G) after the two injection moulding cycles (Z1, Z2) immediately at the injection moulding assembly (A).

6. Method according to at least one of the preceding claims, **characterised in that** the two injection moulding cycles (Z1, Z2) are carried out in one injection moulding machine or in two injection moulding machines (M, M1).

7. Injection moulding tool (W, W1, W2, W3) for forming parts of a composter (K) from plastic material, which composter (K) is to be built completely from four side parts (3, 4) and a lid (6, 6a), by injection moulding cycles (Z1, Z2) in an injection moulding machine (M1, M), **characterised in that** the injection moulding tool (W1, W2, W3) comprises a moulding cavity for a side part (3) without a removal flap or with a removal flap (5), and a further moulding cavity for a side part (3, 4) having a removal flap (5) or without a removal flap for a respective simultaneous production of composter parts, and that all parts of the complete composter are to be produced in the injection moulding tool in respective two injection moulding cycles (Z1, Z2).

8. Injection moulding tool according to claim 7, **characterised in that** an injection blocking device (18, 19) is provided in the tool (W3) for the moulding cavity (8a) for the lid (6a).

9. Injection moulding assembly (A) comprising at least one injection moulding machine (M, M1) and at least one tool (W, W1, W2, W3) for forming parts of a composter (K) from plastic material in injection moulding cycles (Z1, Z2), the complete composter (K) being to be built from four side parts (3, 4) and two lid halves (6) or a lid (6a), wherein the injection moulding assembly (A) comprises at least one injection moulding tool (W1, W, W2, W3) according to claim 7.

10. Injection moulding assembly according to claim 9, **characterised in that** a packing station (P) for packing the parts for a complete composter (K) formed in two injection moulding cycles (Z1, Z2) as a container (G) is provided directly at the injection moulding assembly (A).

11. Injection moulding assembly according to claim 9, **characterised in that** a weeding-out station (S) is provided in the injection moulding assembly (A), for weeding-out one part, e.g. a lid (6a), which was formed in excess during the two injection moulding cycles (Z1, Z2) forming all parts of the complete composter (K).

## Revendications

1. Procédé pour fabriquer les éléments d'un composteur entier (K) en matière plastique apte à être assemblé à partir de quatre éléments latéraux (3, 4) et d'un couvercle (6, 6a), par moulage par injection desdits éléments, dans au moins une machine de moulage par injection (M, M1), contenant un moule (W, W1, W2, W3), d'une installation de moulage par injection (A) dans des cycles de moulage par injection (Z1, Z2), **caractérisé en ce que** dans chaque cycle de moulage par injection (Z1, Z2), on moule en même temps au moins deux éléments différents du composteur (K) dans un moule (W, W1, W2, W3), et dans deux cycles de moulage par injection (Z1, Z2), on moule tous les éléments pour un composteur entier (K).

2. Procédé selon la revendication 1, **caractérisé en ce que** pour le composteur entier (K), dans chacun des deux cycles de moulage par injection (Z1, Z2) on moule en même temps dans un moule seulement et exactement les éléments de la moitié dudit composteur entier (K) : une moitié de couvercle (6), un élément latéral (4) avec un volet d'évacuation (5), et un élément latéral (3) sans volet d'évacuation.

3. Procédé selon la revendication 1, **caractérisé en ce que** pour le composteur entier (K), dans un premier cycle de moulage par injection (Z1) on moule dans un moule une moitié de couvercle (6) ou un couvercle (6a) et deux éléments latéraux (4) pourvus d'un volet d'évacuation (5), et dans le second cycle de moulage par injection (Z2) on moule dans un second moule une moitié de couvercle (6) ou un couvercle (6a) et deux éléments latéraux (3) sans volet d'évacuation, dans les deux cas en même temps.

4. Procédé selon la revendication 3, **caractérisé en ce que** dans un cycle de moulage par injection (Z1) dans le moule (W3) le moulage d'un couvercle (6a) est sélectivement bloqué ou autorisé.

5. Procédé selon l'une au moins des revendications précédentes, étant précisé que tous les éléments pour un composteur entier sont emballés sous forme de kit (G), **caractérisé en ce que** les éléments du composteur entier (K), après les deux cycles de moulage par injection (Z1, Z2), sont emballés pour former le kit (G) directement sur l'installation de moulage par injection (A).

6. Procédé selon l'une au moins des revendications précédentes, **caractérisé en ce que** les deux cycles de moulage par injection (Z1, Z2) sont réalisés dans une ou deux machines de moulage par injection (M, M1).

7. Moule d'injection (W, W1, W2, W3) pour mouler des éléments d'un composteur entier en matière plastique apte à être assemblé à partir de quatre éléments latéraux (3, 4) et d'un couvercle (6, 6a), dans des cycles de moulage par injection (Z1, Z2) dans une machine de moulage par injection (M, M1), **caractérisé en ce que** le moule d'injection (W1, W2, W3) présente une empreinte (8, 8a) pour une moitié de couvercle (6) ou un couvercle (6a), une empreinte pour un élément latéral (3) sans volet d'évacuation ou avec un volet d'évacuation (5), et une autre empreinte pour un élément latéral (3, 4) avec un volet d'évacuation (5) ou sans volet d'évacuation, pour le moulage simultané d'éléments de composteur, et **en ce que** dans le moule d'injection, tous les éléments pour un composteur entier sont aptes à être fabriqués dans deux cycles (Z1, Z2).

8. Moule d'injection selon la revendication 7, **caractérisé en ce qu'**il est prévu dans le moule (W3) un dispositif de blocage d'injection (18, 19) pour l'empreinte (8a) pour le couvercle (6a).

9. Installation de moulage par injection (A) avec au moins une machine de moulage par injection (M, M1) et au moins un moule (W, W1, W2, W3) pour mouler des éléments d'un composteur entier (K) en matière plastique apte à être assemblé à partir de quatre éléments latéraux (3, 4) et de deux moitiés de couvercle (6) ou d'un couvercle (6a), dans des cycles de moulage par injection (Z1, Z2), étant précisé que l'installation de moulage par injection (A) comporte au moins un moule d'injection (W, W1, W2, W3) selon la revendication 7.

10. Installation d'injection selon la revendication 9, **caractérisée en ce qu'**il est prévu directement sur l'installation de moulage par injection (A) une station d'emballage (P) pour emballer en un kit (G) les éléments du composteur entier (K) moulés dans deux cycles de moulage par injection (Z1, Z2).

11. Installation de moulage par injection selon la revendication 9, **caractérisé en ce qu'**il est prévu dans l'installation de moulage par injection (A) une station de séparation (S) pour un élément, par exemple un couvercle (6a), moulé en excédent lors des deux cycles de moulage par injection (Z1, Z2) pour former tous les éléments pour le composteur entier (K).
